(19) **Europäisches Patentamt**
**European Patent Office**
**Office européen des brevets**

(11) **EP 2 368 129 B1**

(12) **FASCICULE DE BREVET EUROPEEN**

(45) Date de publication et mention de la délivrance du brevet:
**22.05.2013 Bulletin 2013/21**

(21) Numéro de dépôt: **09760837.6**

(22) Date de dépôt: **23.11.2009**

(51) Int Cl.:
***G01S 3/74*** *(2006.01)*

(86) Numéro de dépôt international:
**PCT/EP2009/065663**

(87) Numéro de publication internationale:
**WO 2010/072494 (01.07.2010 Gazette 2010/26)**

(54) **PROCÉDÉ DE DETERMINATION DES ANGLES D'ARRIVÉE EN AZIMUT ET EN ELEVATION DE SOURCES COHERENTES**

VERFAHREN ZUR BESTIMMUNG VON AZIMUTH- UND ERHEBUNGSWINKELN DER ANKUNFT KOHÄRENTER QUELLEN

METHOD FOR DETERMINING AZIMUTH AND ELEVATION ANGLES OF ARRIVAL OF COHERENT SOURCES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.12.2008 FR 0807404**

(43) Date de publication de la demande:
**28.09.2011 Bulletin 2011/39**

(73) Titulaire: **THALES**
**92200 Neuilly-sur-Seine (FR)**

(72) Inventeurs:
- **FERREOL, Anne**
  **F-92526 Neuilly-sur-Seine Cedex (FR)**
- **BRUGIER, Jeremy**
  **F-92526 Neuilly-sur-Seine Cedex (FR)**
- **MORGAND, Philippe**
  **F-92526 Neuilly-sur-Seine Cedex (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A- 2 872 350    FR-A- 2 917 180**

- **UNNIKRISHNA PILLAI S ET AL: "FORWARD/ BACKWARD SPATIAL SMOOTHING TECHNIQUES FOR COHERENT SIGNAL IDENTIFICATION" IEEE TRANSACTIONS ON ACOUSTICS, SPEECH AND SIGNAL PROCESSING, IEEE INC. NEW YORK, USA, vol. 37, no. 1, 1 janvier 1989 (1989-01-01), pages 8-15, XP000992947 ISSN: 0096-3518 cité dans la demande**
- **FERRÉOL A ET AL: "Low-cost algorithm for some bearing estimation methods in presence of separable nuisance parameters" ELECTRONICS LETTERS, IEE STEVENAGE, GB, vol. 40, no. 15, 22 juillet 2004 (2004-07-22), pages 966-967, XP006022397 ISSN: 0013-5194 cité dans la demande**

**EP 2 368 129 B1**

**Description**

La présente invention concerne un procédé de détermination des angles d'arrivée en azimut et en élévation de sources cohérentes. Elle est utilisée, par exemple, dans tous les systèmes de localisation dans un contexte urbain où le canal de propagation est perturbé par un grand nombre d'obstacles comme les immeubles. De manière générale, elle peut être utilisée pour localiser des émetteurs, par exemple un téléphone portable, dans un contexte de propagation difficile, qu'il s'agisse d'un milieu urbain, semi-urbain — par exemple un site aéroportuaire —, de l'intérieur d'un bâtiment ou sous la neige, en cas d'avalanche. L'invention peut aussi être utilisée dans des procédés d'imagerie médicale, pour localiser des tumeurs ou des foyers épileptiques, les tissus du corps humain étant à l'origine de multi-trajets d'onde. Elle s'applique également dans des systèmes de sondage pour la recherche minière et pétrolière dans le domaine sismique, où l'on cherche à estimer des angles d'arrivées avec des multi-trajets dans le milieu de propagation complexe de la croûte terrestre.

L'invention se situe dans le domaine technique du traitement d'antennes qui traite les signaux de plusieurs sources émettrices à partir d'un système de réception multi-capteurs. Plus particulièrement, l'invention concerne le domaine de la goniométrie qui consiste à estimer les angles d'arrivées des sources.

Dans un contexte électromagnétique, les capteurs sont des antennes et les sources radioélectriques se propagent suivant une polarisation dépendante de l'antenne d'émission. Dans un contexte acoustique les capteurs sont des microphones et les sources sont sonores.

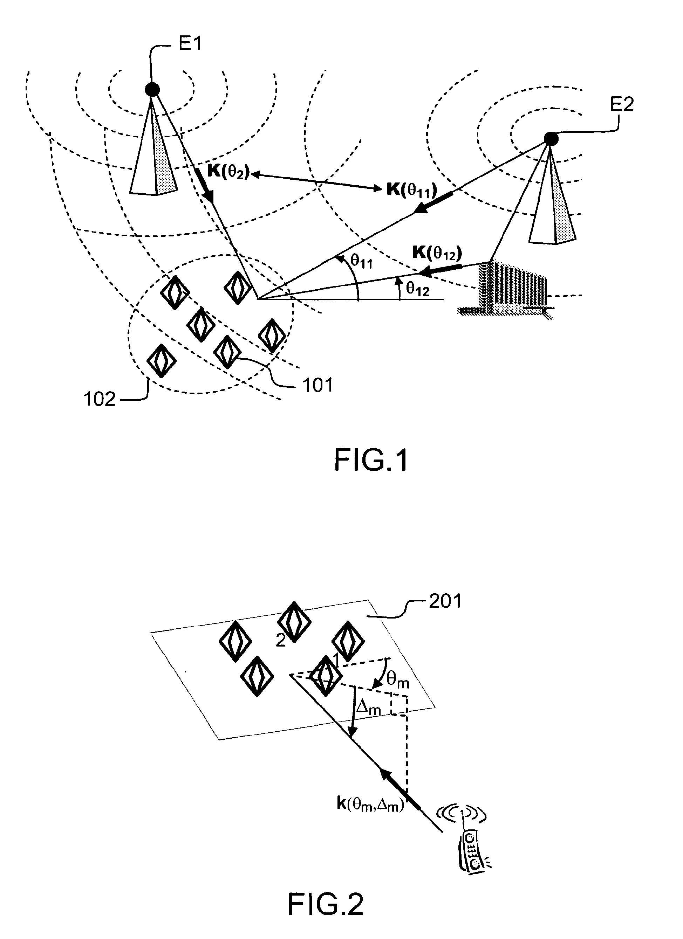

La figure 1 montre qu'un système de traitement d'antennes comprend un réseau 102 de capteurs recevant des sources avec des angles d'arrivées $\theta_{mp}$ différents. Les capteurs élémentaires 101 du réseau reçoivent les sources E1, E2 avec une phase et une amplitude dépendant en particulier de leurs angles d'incidences et de la position des capteurs. Les angles d'incidences sont paramétrés en une dimension (1D) par l'azimut $\theta_m$ et en deux dimensions (2D) par l'azimut $\theta_m$ et l'élévation $\Delta_m$.

D'après la figure 2, une goniométrie 1 D est définie par des techniques qui estiment uniquement l'azimut en supposant que les ondes des sources se propagent dans le plan 201 du réseau de capteurs. Lorsque la technique de goniométrie estime conjointement l'azimut et l'élévation d'une source, il est question de goniométrie 2D.

Les techniques de traitement d'antennes ont notamment pour objectif d'exploiter la diversité spatiale générée par la réception multi-antennes des signaux incidents, autrement dit, utiliser la position des antennes du réseau pour mieux utiliser les différences en incidence et distance des sources.

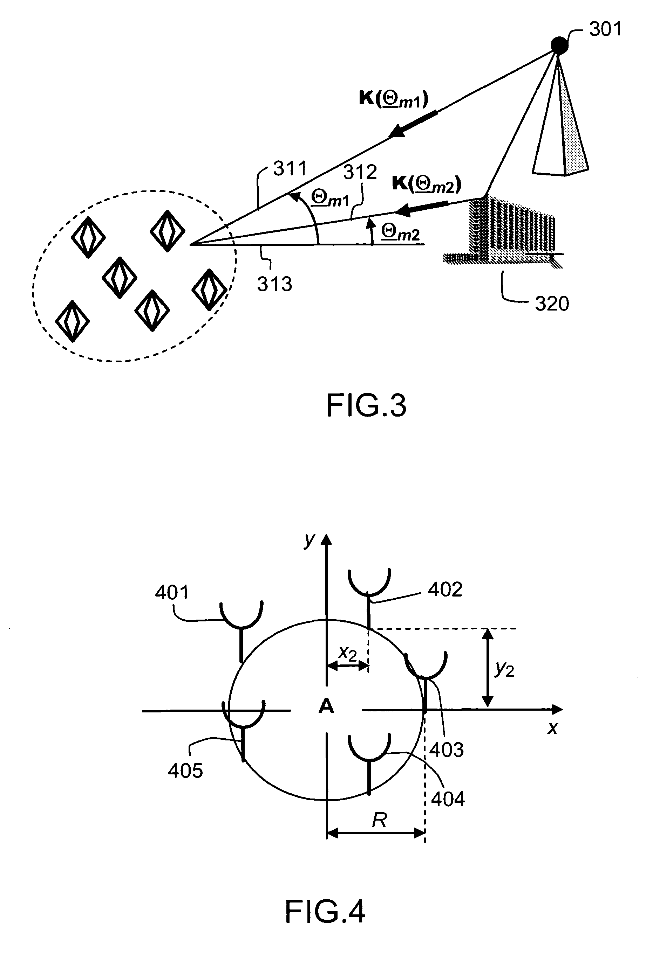

La figure 3 illustre une application à la goniométrie en présence de multi-trajets. La $m$-ième source 301 se propage suivant $P$ trajets 311, 312, 313 d'incidences $\theta_{mp}$ ($1 \leq p \leq P$) qui sont provoqués par $P$-1 obstacles 320 dans l'environnement radioélectrique. Le problème traité dans le procédé selon l'invention est, notamment, d'effectuer une goniométrie 2D pour des trajets cohérents où l'écart de temps de propagation entre le trajet direct et un trajet secondaire est très faible.

Une méthode connue pour faire de la goniométrie est l'algorithme MUSIC [1]. Or, cet algorithme ne permet pas d'estimer les incidences des sources en présence de trajets cohérents.

Les algorithmes permettant de traiter le cas des sources cohérentes sont les algorithmes du Maximum de Vraisemblance [2][3] qui sont applicables sur des réseaux de capteurs à géométrie quelconques. Toutefois ces techniques nécessitent le calcul d'un critère multidimensionnel dont le nombre de dimensions dépend du nombre de trajets ainsi que du nombre de paramètres d'incidence par trajet. Plus particulièrement en présence de $K$ trajets, le critère est à $2K$ dimensions pour une goniométrie 2D afin d'estimer conjointement toutes les incidences $(\Theta_1, ..., \Theta_K)$. Il faut remarquer que même en présence d'un nombre $K'$ de trajets cohérents inférieur au nombre total $K$ de trajets, le calcul du critère du maximum de vraisemblance reste à $2K$ dimensions. Afin de réduire le nombre de dimensions du critère à $2K'$, une alternative est d'appliquer la méthode MUSIC-cohérent [4]. Toutefois, l'algorithme MUSIC-cohérent [4] nécessite un nombre de capteurs élevé et des ressources de calculs très importantes.

Une autre alternative pour réduire le coût de calcul est de mettre en oeuvre des techniques de lissage spatial ou de Forward-Backward [5][6] (« Forward-Backward » signifiant passage avant - passage arrière), ces techniques nécessitant des géométries particulières de réseau. En effet, le lissage spatial est applicable lorsque le réseau se décompose en sous réseaux ayant la même géométrie (ex : Réseau linéaire équi-espacé ou réseau sur une grille 2D régulière). L'algorithme du Forward-Backward nécessite un réseau avec un centre de symétrie. Ces techniques d'avèrent très contraignantes en terme de géométrie du réseau de capteurs, a fortiori pour une goniométrie 2D, où la contrainte de symétrie ou de sous-réseaux identiques translatés est difficile à satisfaire.

Pour la goniométrie en 1 D, des techniques de lissage spatial ont été envisagées sur des réseaux quelconques[6][7]. Pour ce faire, le réseau de capteurs est interpolé suivant la géométrie adaptée au lissage spatial (ou Forward-Backward). Dans [6] la technique d'interpolation ne s'intéresse qu'à un seul secteur angulaire et dans [7] l'algorithme est adapté aux cas de plusieurs secteurs angulaires pour l'interpolation. Toutefois ce genre de technique est difficilement adaptable au cas de la goniométrie 2D.

Un but de l'invention est de proposer une méthode pour déterminer, à partir d'un réseau de capteurs, la direction d'arrivée en azimut et en élévation de signaux cohérents avec un coût de calcul réduit et en limitant le plus possible les contraintes géométriques à imposer au réseau de capteurs. A cet effet, l'invention a pour objet un procédé de détermination conjointe de l'angle d'azimut θ et de l'angle d'élévation Δ des vecteurs d'ondes de P ondes dans un système comprenant un réseau de capteurs, plusieurs ondes parmi les P ondes se propageant selon des trajets cohérents ou sensiblement cohérents entre une source et lesdits capteurs, le procédé étant caractérisé en ce qu'il comprend au moins les étapes suivantes :

■ sélectionner un sous-ensemble de capteurs parmi les dits capteurs pour former un sous-réseau linéaire de capteurs ;
■ appliquer, sur les signaux issus du sous-réseau choisi, un algorithme suivant une seule dimension pour décorréler les sources des P ondes ;
■ déterminer une première composante w desdits vecteurs d'onde en appliquant, sur les signaux observés sur les capteurs du sous-réseau choisi, un algorithme de goniométrie suivant la seule dimension w ;
■ déterminer une deuxième composante u desdits vecteurs d'onde en appliquant un algorithme de goniométrie suivant la seule dimension u sur les signaux issus de l'ensemble du réseau de capteurs,
■ déterminer θ et Δ à partir de w et u.

Le procédé selon l'invention permet de réduire la complexité d'un problème de goniométrie à deux dimensions en le scindant en deux phases à une seule dimension : une première phase d'estimation d'une valeur de projection w du vecteur d'onde, puis une phase d'estimation d'une valeur de l'autre composante u du vecteur d'onde.
Selon une mise en oeuvre du procédé selon l'invention,

■ on choisit les capteurs constituant le sous-réseau de telle sorte qu'au moins une partie du sous-réseau soit invariante par translation ;
■ on applique un algorithme de lissage spatial pour décorréler les sources des P ondes.

Par « invariant par translation », on entend qu'il existe au moins un sous-ensemble du sous-réseau dont les capteurs sont disposés comme s'ils résultaient d'une translation d'un autre sous-ensemble de capteurs dudit sous-réseau.
Selon une mise en oeuvre du procédé selon l'invention,

■ on choisit les capteurs constituant le sous-réseau de telle sorte qu'au moins une partie de sous-réseau comporte un centre de symétrie ;
■ on applique un algorithme de Forward-Backward pour décorréler les sources des P ondes.

Par « centre de symétrie du sous-réseau », on entend que pour chaque capteur, il existe un capteur placée de manière symétrique par rapport au dit centre.
Selon une mise en oeuvre du procédé selon l'invention, la première composante w déterminée des vecteurs d'onde est la projection, sur l'axe formé par le sous-réseau linéaire, de la projection des vecteurs d'onde sur le plan formé par le réseau de capteurs. Autrement dit, pour chaque trajet p, $w_p = \cos(\theta_p - \alpha).\cos(\Delta_p)$, $\alpha$ étant l'angle en azimut selon lequel l'axe formé par le sous-réseau linéaire est orienté.
Selon une mise en oeuvre du procédé selon l'invention, le procédé comporte au moins les étapes suivantes :

■ calculer la matrice de covariance $R_x$ sur l'ensemble du réseau de capteurs ;
■ extraire à partir de $R_x$, la matrice de covariance $R_x'$ correspondant au sous-réseau linéaire choisi ;
■ appliquer un algorithme de décorrélation des sources sur $R_x'$ ;
■ estimer, pour chaque trajet p, les valeurs de la première composante $w_p = \cos(\theta_p - \alpha).\cos(\Delta_p)$ en appliquant un algorithme de goniométrie en 1 D sur la matrice $R_x'$ décorrélée, $\alpha$ étant l'angle d'orientation en azimut de l'axe formé par le sous-réseau linéaire ;
■ estimer les valeurs de la deuxième composante $u_p = \cos(\theta_p).\cos(\Delta_p)$, pour chaque trajet p, en appliquant un algorithme de goniométrie en 1 D sur la matrice $R_x$ ;
■ déterminer, à partir des valeurs des couples $(w_p, u_p)$, les valeurs des couples azimut-élévation $(\theta_p, \Delta_p)$.

Selon une mise en oeuvre du procédé selon l'invention, l'algorithme de goniométrie utilisé pour déterminer la première composante w de chaque vecteur d'onde P est l'algorithme MUSIC, le critère $J_{MUSIC}$ à minimiser pour déterminer ladite composante w étant égal à $J_{MUSIC}(w) = \dfrac{\mathbf{a}'(w)^H \mathbf{\Pi}_b' \mathbf{a}'(w)}{\mathbf{a}'(w)^H \mathbf{a}'(w)}$,

où $\Pi_b^I$ est le projecteur bruit extrait de la matrice de covariance décorrélée $R_x{}'$ correspondant au sous-réseau linéaire choisi, et $\mathbf{a}(w)'$ représente la réponse du sous-réseau choisi aux ondes incidentes P.

Selon une mise en oeuvre du procédé selon l'invention, l'algorithme de goniométrie utilisé pour déterminer la deuxième composante u est l'algorithme MUSIC-cohérent en une seule dimension, le critère à minimiser étant :

$$J_{MUSIC-Coherent}(\underline{\Theta}) = \frac{\det\left(\mathbf{D}(\underline{\Theta})^H \, \mathbf{\Pi}_b \mathbf{D}(\underline{\Theta})\right)}{\det\left(\mathbf{D}(\underline{\Theta})^H \, \mathbf{D}(\underline{\Theta})\right)}$$

où $\underline{\Theta} = \{f_1(u_1) \cdots f_{k_{\max}}(u_{k_{\max}})\}$, avec $f_p(u) = f\left(u, \dfrac{w_p - u\cos(\alpha)}{\sin(\alpha)}\right)$, $\alpha$ étant l'angle d'orientation en azimut de l'axe formé par le sous-réseau linéaire, $D(\underline{\Theta})$ étant un vecteur égal à $[\,a(\underline{\Theta}_1) \ldots a(\underline{\Theta}_{Kmax})\,]$, $a(\underline{\Theta}_i)$ étant la réponse du réseau de capteurs au trajet d'indice i, $K_{max}$ étant le nombre maximum de trajets cohérents.

Selon une autre mise en oeuvre du procédé selon l'invention, l'algorithme de goniométrie utilisé pour déterminer la deuxième composante est l'algorithme du maximum de vraisemblance.

Selon une mise en oeuvre du procédé selon l'invention, le réseau est perturbé par du couplage mutuel de matrice Z connue, et le procédé comporte une étape de suppression du couplage exécutée préalablement aux étapes d'estimation des valeurs des composantes w et u, ladite étape de suppression du couplage déterminant une matrice de covariance nettoyée du bruit en appliquant le traitement suivant sur la matrice de covariance : $Z^{-1}(R_x - \sigma^2 I)Z^{-1H}$, $\sigma^2$ étant le niveau de bruit estimé.

Selon une mise en oeuvre du procédé selon l'invention, la détermination des couples de valeurs $(\theta_p, \Delta_p)$ à partir des valeurs de couples $(w_p, u_p)$ est effectuée comme suit :

$$\begin{cases} \theta_p = angle\left(u_p + jv_p\right) \\ \Delta_p = \cos^{-1}\left(\left|u_p + jv_p\right|\right) \end{cases}$$

où

$$v_p = \frac{w_p - u_p \cos(\alpha)}{\sin(\alpha)}$$

D'autres caractéristiques apparaîtront à la lecture de la description détaillée donnée à titre d'exemple et non limitative qui suit faite en regard de dessins annexés qui représentent :

- la figure 1, un exemple de signaux émis par un émetteur et se propageant vers un réseau de capteurs,
- la figure 2, la représentation de l'incidence d'une source sur un plan de capteurs,
- la figure 3, une illustration de la propagation de signaux en multi-trajets,
- la figure 4, un exemple de réseaux de capteurs de position $(x_n, y_n)$,
- la figure 5, un exemple de réseau de capteurs composé de deux sous-réseaux invariants par translation,
- la figure 6, un exemple de réseau de capteurs composé de deux sous-réseaux permettant de décorréler deux trajets cohérents en azimut-élévation,
- la figure 7, un réseau linéaire de capteurs où le lissage spatial permet de décorréler deux trajets cohérents en azimut,
- la figure 8, un réseau de capteurs comportant un centre de symétrie en O,
- la figure 9, deux réseaux linéaires à cinq capteurs, permettant de décorréler deux trajets cohérents en azimut pour, respectivement, le lissage spatial et le forward-backward,
- la figure 10, un premier exemple de réseau de capteurs contenant un sous-réseau linéaire de capteurs et compatible du procédé selon l'invention,

- la figure 11, un second exemple de réseau de capteurs contenant un sous-réseau linéaire de capteurs et compatible du procédé selon l'invention.

Avant de détailler un exemple de mise en oeuvre du procédé selon l'invention, quelques rappels sur la modélisation du signal en sortie d'un réseau de capteurs sont donnés.

En présence de $M$ sources où la $m$-ième source contient $P_m$ multi-trajets, le signal en sortie du réseau de capteurs s'écrit de la façon suivante :

$$\mathbf{x}(t) = \begin{bmatrix} x_1(t) \\ \vdots \\ x_N(t) \end{bmatrix} = \sum_{m=1}^{M} \sum_{p=1}^{P_m} \rho_{mp} \; \mathbf{a}(\underline{\Theta}_{mp}) \; s_m(t - \tau_{mp}) + \mathbf{n}(t) \qquad (1) \; .$$

où $x_n(t)$ est le signal en sortie du $n$-ième capteur, $N$ le nombre de capteurs, $\mathbf{n}(t)$ est le bruit additif, $\mathbf{a}(\underline{\Theta})$ est la réponse du réseau de capteurs à une source de direction $\underline{\Theta}=(\theta,\Delta)$, $\theta$ est l'azimut, $\Delta$ l'élévation et $\rho_{mp}, \theta_{mp}, \tau_{mp}$ sont respectivement l'atténuation, la direction et le retard du $p$-ième trajets de la $m$-ième source. Le vecteur $\mathbf{a}(\underline{\Theta})$ qui s'appelle aussi vecteur directeur dépend des positions $(x_n, y_n)$ des capteurs 401, 402, 403, 404, 405 (voir Figure 4) s'écrit

$$\mathbf{a}(\underline{\Theta}) = \mathbf{Z} \begin{bmatrix} a_1(\underline{\Theta}) \\ \vdots \\ a_N(\underline{\Theta}) \end{bmatrix} \quad \text{avec} \quad \begin{cases} a_n(\underline{\Theta}) = \exp\left( j\dfrac{2\pi}{\lambda}(x_n u + y_n v) \right) \\ u = \cos(\theta)\cos(\Delta) \\ v = \sin(\theta)\cos(\Delta) \end{cases} \qquad (2) \; .$$

Où $\mathbf{Z}$ est la matrice de couplage, $\lambda$ est la longueur d'onde et $(u,v)$ sont les coordonnées du vecteur d'onde dans le plan de l'antenne.

En présence de trajets cohérents où les retards des trajets vérifient $\tau_{m1} = ... = \tau_{mP_m}$, le modèle de signal de l'équation (1) devient

$$\mathbf{x}(t) = \sum_{m=1}^{M} \mathbf{a}(\underline{\Theta}_{\mathbf{m}}, \boldsymbol{\rho}_{\mathbf{m}}, P_m) \; s_m(t) + \mathbf{n}(t) \quad \text{avec} \quad \mathbf{a}(\underline{\Theta}_{\mathbf{m}}, \boldsymbol{\rho}_{\mathbf{m}}, P_m) = \sum_{p=1}^{P_m} \rho_{mp} \; \mathbf{a}(\underline{\Theta}_{mp}) \qquad (3) \; .$$

où $\mathbf{a}(\underline{\Theta}_m, \rho_m, P_m)$ est la réponse du réseau de capteurs à la m-ième source, $\underline{\Theta}_m = [\underline{\Theta}_{m1} \cdots \underline{\Theta}_{mP_m}]^T$ et $\rho_m = [\rho_{m1} \cdots \rho_{mP_m}]^T$. Le vecteur directeur de la source n'est plus $a(\underline{\Theta}_{m1})$ mais un vecteur directeur composite $a(\underline{\Theta}_m, \rho_m, P_m)$ dépendant d'un plus grand nombre de paramètres.

De façon plus générale, en présence de K groupes de trajets cohérents, le signal s'écrit :

$$\mathbf{x}(t) = \sum_{k=1}^{K} \mathbf{a}(\underline{\Theta}_k, \boldsymbol{\rho}_k, K_k) \; s_k(t) + \mathbf{n}(t) \quad \text{où} \quad K_{\max} = \max_k \{K_k\} \qquad (4) \; .$$

Pour permettre au lecteur de mieux comprendre le procédé selon l'invention, le traitement des sources cohérentes en azimut-élévation dans l'état de l'art est explicité ci-après.

Un premier algorithme MUSIC-cohérent [4] est d'abord présenté. L'algorithme MUSIC [1] est une méthode à haute résolution basée sur la décomposition en éléments propres de la matrice de covariance $\mathbf{R}_x = E[x(t)\,\mathbf{x}(t)^H]$ du signal multi-capteurs $\mathbf{x}(t)$, où $E[.]$ est l'espérance mathématique. L'expression de la matrice $\mathbf{R}_x$ est la suivante d'après (4) :

$$\mathbf{R}_x = \mathbf{A}\mathbf{R}_s\mathbf{A}^H + \sigma^2\mathbf{I}_N \quad \text{avec} \quad \begin{cases} \mathbf{R}_s = E\left[\mathbf{s}(t)\mathbf{s}(t)^H\right] \\ E\left[\mathbf{n}(t)\mathbf{n}(t)^H\right] = \sigma^2\mathbf{I}_N \\ \mathbf{A} = \left[\mathbf{a}(\underline{\Theta}_1, \boldsymbol{\rho}_1, K_1) \, ... \, \mathbf{a}(\underline{\Theta}_K, \boldsymbol{\rho}_K, K_K)\right] \\ \mathbf{s}(t) = \left[s_1(t) \, ... \, s_K(t)\right]^T \end{cases} \tag{5}$$

En présence de $K$ groupes de trajets cohérents, le rang de la matrice $\mathbf{R}_x$ vaut $K$. Dans ces conditions les $K$ vecteurs propres $\mathbf{e}_k$ ($1 \leq k \leq K$) associés aux $K$ plus fortes valeurs propres $\lambda_k$ de $\mathbf{R}_x$ vérifient

$$\mathbf{e}_k = \sum_{i=1}^{K} \alpha_{ik} \, \mathbf{a}(\underline{\Theta}_i, \boldsymbol{\rho}_i, K_i) \quad \text{pour} \ (1 \leq k \leq K) \tag{6}$$

Les $N$-$K$ vecteurs propres $\mathbf{e}_i$ ($K+1 \leq l \leq N$) associés aux plus faibles valeurs propres de $\mathbf{R}_x$ sont orthogonaux aux vecteurs $\mathbf{e}_k$ ($1 \leq k \leq K$) de l'expression (6) et définissent l'espace bruit. Comme les vecteurs $\mathbf{e}_i$ et $\mathbf{e}_k$ sont orthogonaux, les vecteurs directeurs $\mathbf{a}(\underline{\Theta}_i, \rho_i, K_i)$ sont orthogonaux aux vecteurs bruit $\mathbf{e}_i$. Dans ces conditions, les $K$ minima ($\underline{\Theta}_k, \rho_k, K_k$) du critère suivant de MUSIC

$$J_{MUSIC}(\underline{\Theta}, \boldsymbol{\rho}) = \frac{\mathbf{a}(\underline{\Theta}, \boldsymbol{\rho}, K_{\max})^H \, \mathbf{\Pi}_b \mathbf{a}(\underline{\Theta}, \boldsymbol{\rho}, K_{\max})}{\mathbf{a}(\underline{\Theta}, \boldsymbol{\rho}, K_{\max})^H \, \mathbf{a}(\underline{\Theta}, \boldsymbol{\rho}, K_{\max})} \quad \text{avec} \quad \mathbf{\Pi}_b = \sum_{i=K+1}^{N} \mathbf{e}_i \mathbf{e}_i^H \tag{7}$$

permettent de donner les directions $\underline{\Theta}_k$ de chaque trajet. Toutefois le coût de calcul du critère de l'équation (7) est très important car dépend de l'incidence de $K_{max}$ trajets cohérents ainsi que de leurs amplitudes relatives : $(\Theta, \rho)$.

La méthode MUSIC cohérent décrit dans [4] a pour objectif de réduire le nombre de paramètres de recherche du critère de MUSIC. Pour ce faire le vecteur $a(\underline{\Theta}_m, \rho_m, P_m)$ de l'équation (3) se ré-écrit de la manière suivante :

$$\mathbf{a}(\underline{\Theta}, \boldsymbol{\rho}, K_{\max}) = \mathbf{D}(\underline{\Theta})\boldsymbol{\rho} \quad \text{avec} \quad \begin{cases} \mathbf{D}(\underline{\Theta}) = \left[\mathbf{a}(\underline{\Theta}_1) \quad \cdots \quad \mathbf{a}(\underline{\Theta}_{K_{\max}})\right] \\ \boldsymbol{\rho} = \left[\rho_1 \quad \cdots \quad \rho_{K_{\max}}\right]^T \\ \underline{\Theta} = \left\{\underline{\Theta}_1 \quad \cdots \quad \underline{\Theta}_{K_{\max}}\right\} \end{cases} \tag{8}$$

Dans ces conditions, le critère de l'équation (7) se réduit a l'expression suivante :

$$J_{MUSIC-Coherent}(\underline{\Theta}) = \frac{\det\left(\mathbf{D}(\underline{\Theta})^H \, \mathbf{\Pi}_b \mathbf{D}(\underline{\Theta})\right)}{\det\left(\mathbf{D}(\underline{\Theta})^H \mathbf{D}(\underline{\Theta})\right)} \tag{9}$$

Où det($\mathbf{M}$) est le déterminant de la matrice $\mathbf{M}$. Le nombre de dimensions du critère est alors réduit au $2K_{max}$ paramètres de $\underline{\Theta}$ où $K_{max}$ est le nombre maximum de trajets cohérents. En conséquence les K minima du critère $J_{MUSIC-Coherent}(\underline{\Theta})$ donnent les directions $\underline{\Theta}_k = \{\underline{\Theta}_{k1} \cdots \underline{\Theta}_{kK_{max}}\}$ des trajets de chaque groupe de trajets cohérents pour $1 \leq k \leq K$. Ainsi, en présence de $K_{max} = 2$ trajets cohérents, le critère de MUSIC-cohérent reste à quatre dimensions pour une goniométrie en azimut-élévation. Plus généralement la méthode MUSIC-cohérent nécessite le calcul d'un critère (9) ayant $2 K_{max}$ dimensions. Toutefois, la méthode ne fait aucune hypothèse sur la géométrie du réseau car elle ne nécessite aucune contrainte sur l'expression du vecteur directeur $a(\underline{\Theta})$.

Des méthodes alternatives et également connues pour le traitement des sources cohérentes sont les techniques de lissage spatial [5][6] et de Forward-Backward [5]. Ces méthodes permettent de décorréler des sources en effectuant un simple pré-traitement sur la matrice de covariance des signaux reçus. Il est alors possible d'appliquer un algorithme de goniométrie tel que MUSIC sur la nouvelle matrice de covariance. Ces techniques sont issues du domaine de l'analyse spectrale dont l'objectif est de modéliser le spectre en fréquence d'un signal.

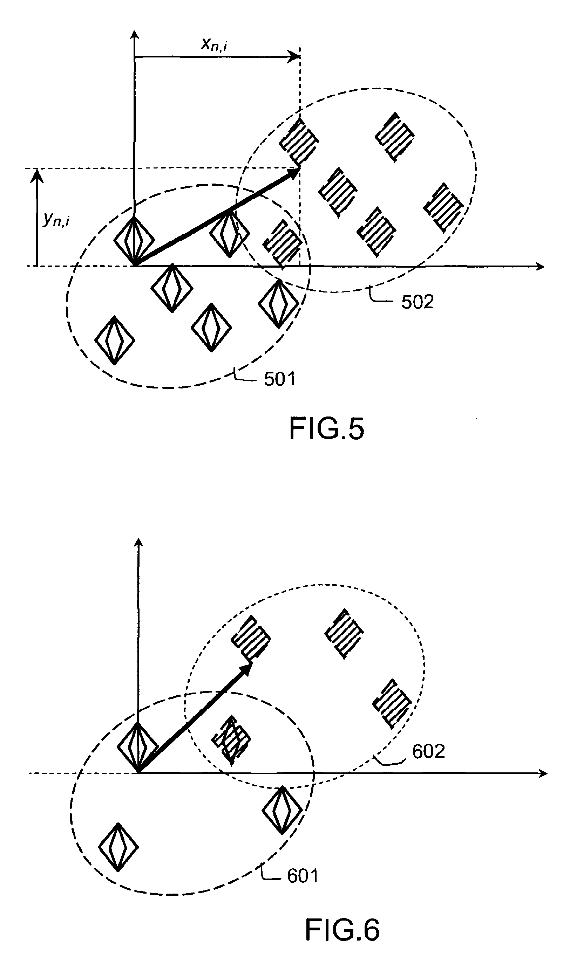

Les techniques de lissage spatial [5][6] sont applicables sur un réseau de capteurs composé de sous-réseaux 501, 502 invariants par translation comme illustré sur la figure 5. En présence de $P$ trajets (cohérents ou non), l'expression (1) du vecteur observation peut se ré-écrire

$$\mathbf{x}(t) = \sum_{p=1}^{P} \rho_p \; \mathbf{a}(\underline{\Theta}_p) \; \mathbf{s}_p(t) + \mathbf{n}(t) = \mathbf{A} \; \mathbf{s}(t) + \mathbf{n}(t) \qquad (10)$$

avec $\mathbf{A} = [\mathbf{a}(\underline{\Theta}_1) ... \mathbf{a}(\underline{\Theta}_P)]$.

L'expression du signal reçu sur le $i$-ième sous réseau s'écrit alors :

$$\mathbf{x}^i(t) = \mathbf{P}^i \; \mathbf{x}(t) = \sum_{p=1}^{P} \rho_p \; \mathbf{a}^i(\underline{\Theta}_p) \; \mathbf{s}_p(t) + \mathbf{n}(t) = \mathbf{A}^i \; \mathbf{s}(t) + \mathbf{n}(t) \qquad (11)$$

où $\mathbf{A}^i = [\mathbf{a}^i(\underline{\Theta}_1) ... \mathbf{a}^i(\underline{\Theta}_P)]$, $\mathbf{P}^i$ étant une matrice composée de 0 et de 1 permettant de sélectionner le signal du $i$-ième sous réseau dont le vecteur directeur $\mathbf{a}^i(\underline{\Theta})$ vérifie la relation suivante :

$$\mathbf{a}^i(\underline{\Theta}) = \mathbf{P}^i \mathbf{a}(\underline{\Theta}) = \alpha^i(\underline{\Theta}) \mathbf{a}^1(\underline{\Theta}) \qquad (12)$$

En rappelant que l'incidence $\underline{\Theta} = (\theta, \Delta)$ dépend des deux paramètres $\theta$ et $\Delta$.

D'après (11)(12), la matrice de mélange $\mathbf{A}^i$ du $i$-ième sous réseau vérifie

$$\mathbf{A}^i = \mathbf{P}^i \mathbf{A} = \mathbf{A}^1 \Phi_i \; \text{ avec } \; \Phi_i = diag\left\{ \alpha^i(\underline{\Theta}_1) \; \cdots \; \alpha^i(\underline{\Theta}_P) \right\} \qquad (13)$$

D'après (11)(13) la matrice de covariance $\mathbf{R}_x^i = E[\mathbf{x}(t)^i \mathbf{x}(t)^{iH}]$ a l'expression suivante :

$$\mathbf{R}_x^i = \mathbf{A}^1 \Phi_i \mathbf{R}_s \Phi_i^* \mathbf{A}^{1H} + \sigma^2 \mathbf{I}_N \; \text{ où } \; \mathbf{R}_s = E[\mathbf{s}(t) \mathbf{s}(t)^H] \qquad (14)$$

En conséquence, une alternative des techniques de lissage spatial consiste à appliquer un algorithme de type MUSIC sur la matrice de covariance suivante :

$$\mathbf{R}_x^{SM} = \sum_{i=1}^{I} \mathbf{R}_x^i = \sum_{i=1}^{I} \mathbf{P}^i \mathbf{R}_x \left(\mathbf{P}^i\right)^H \qquad (15)$$

où $\mathbf{R}_x = E[\mathbf{x}(t) \mathbf{x}(t)^H]$. Cette procédure a pour objectif d'obtenir une matrice $\mathbf{R}_x^{SM}$ ayant un rang plus élevé que les $\mathbf{R}_x^i$ sans détruire la structure de l'espace signal engendré par $\mathbf{A}^1$. En effet cette technique permet de décorréler au maximum $I$ trajets cohérents car

$$\mathbf{R}_x^{\ SM} = \mathbf{A}^1 \mathbf{R}_s^{\ SM} \mathbf{A}^{1H} + \sigma^2 \mathbf{I}_N, \quad \text{où} \quad \mathbf{R}_s^{\ SM} = \sum_{i=1}^{I} \Phi_i \mathbf{R}_s \dot{\Phi}_i^{\ *} \tag{16}$$

Et ainsi $\text{rang}\{\mathbf{R}_s\} \leq \text{rang}\{\mathbf{R}_s^{\ SM}\} \leq \min(\text{rang}\{\mathbf{R}_s\}I, \sum_{m=1}^{M} P_m)$.

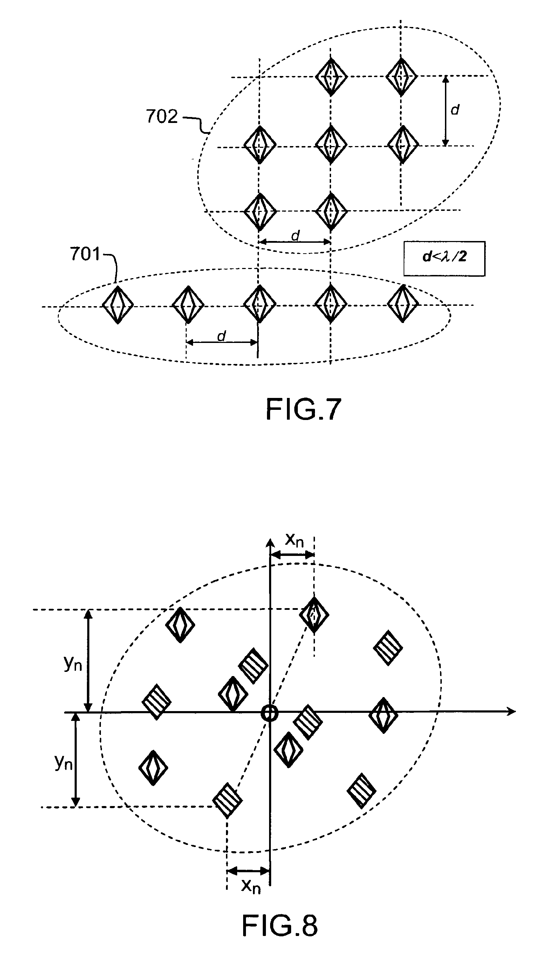

La technique de lissage par Forward-Backward [5] nécessite un réseau de capteurs ayant un centre de symétrie en O comme indiqué dans la Figure 8. Dans ces conditions le vecteur directeur a la structure suivante

$$\mathbf{a}(\underline{\Theta}) = \beta(\underline{\Theta}) \begin{bmatrix} \mathbf{b}(\Theta) \\ \mathbf{b}(\Theta)^* \end{bmatrix} \tag{17}$$

où selon la Figure 8, $\mathbf{b}(\Theta)$ est le vecteur directeur du sous-réseau de coordonnées $(x_n\text{-}x_0, y_n\text{-}y_0)$ et $\mathbf{b}(\Theta)^*$ est le vecteur directeur du sous-réseau de coordonnées $(-x_n\text{-}x_0, -y_n\text{-}y_0)$ sachant que $(x_0, y_0)$ sont les coordonnées du centre de symétrie O. En conséquence le vecteur directeur de l'expression (17) vérifie la relation suivante :

$$\Pi \, \mathbf{a}(\underline{\Theta})^* = \beta(\underline{\Theta})^* \, \mathbf{a}(\underline{\Theta}) \tag{18}$$

Où $\Pi$ est une matrice de permutation composée de 0 et 1. La technique de lissage par Forward-Backward consiste à appliquer un algorithme de goniométrie tel que MUSIC sur la matrice de covariance suivante

$$\mathbf{R}_x^{\ FB} = \mathbf{R}_x + \Pi \mathbf{R}_x^{\ *} \Pi^T \tag{19}$$

Sachant que

$$\mathbf{R}_x^{\ FB} = \mathbf{A} \mathbf{R}_s^{\ FB} \mathbf{A}^H + \sigma^2 \mathbf{I}_N \quad \text{où} \quad \mathbf{R}_s^{\ FB} = \mathbf{R}_s + \Phi_{FB} \mathbf{R}_s \Phi_{FB}^{\ *} \tag{20}$$

la technique permet de décorréler deux trajets cohérents car

$\text{rang}\{\mathbf{R}_s\} \leq \text{rang}\{\mathbf{R}_s^{\ SM}\} \leq \min(2\text{rang}\{\mathbf{R}_s\}, \sum_{m=1}^{M} P_m)$ avec

$$\Phi_{FB} = diag\left\{ \beta(\underline{\Theta}_1) \quad \cdots \quad \beta(\underline{\Theta}_P) \right\} \tag{21}$$

Les techniques de lissage spatial et Forward-Backward peuvent se combiner pour accroître la capacité de décorrélation en nombre de trajets. Ces techniques de lissage permettent de traiter les sources cohérentes avec une puissance de calcul très voisine de la mise en oeuvre d'un seul algorithme de goniométrie tel que MUSIC.

Lorsque le réseau de capteur est perturbé par du couplage mutuel où le vecteur directeur s'écrit

$$\mathbf{a}(\underline{\Theta}) = \mathbf{Z} \, \tilde{\mathbf{a}}(\underline{\Theta}) \tag{22}$$

et où le vecteur directeur $\tilde{\mathbf{a}}(\underline{\Theta})$ vérifie l'une des propriétés des équations (12)(18), les techniques de lissage spatial sont applicables [7]. La matrice de mélange $\mathbf{A}$ de l'équation (10) s'écrit alors

$$\mathbf{A} = \mathbf{Z}\bar{\mathbf{A}} \quad \text{avec } \bar{\mathbf{A}} = \left[ \bar{\mathbf{a}}(\underline{\Theta}_1) \quad \cdots \quad \bar{\mathbf{a}}(\underline{\Theta}_P) \right] \tag{23}$$

En conséquence la matrice de covariance $\mathbf{R}_x = E[\mathbf{x}(t)\,\mathbf{x}(t)^H]$ s'écrit de la manière suivante :

$$\mathbf{R}_x = \mathbf{Z}\left(\bar{\mathbf{A}}\mathbf{R}_s\bar{\mathbf{A}}^H\right)\mathbf{Z}^H + \sigma^2\mathbf{I}_N \tag{24}$$

Sachant que $\hat{\mathbf{A}}^i = \mathbf{P}^i\hat{\mathbf{A}} = \hat{\mathbf{A}}^1\Phi_i$ (où que $\Pi\,\hat{\mathbf{A}}^* = \hat{\mathbf{A}}\Phi_{FB}$), les étapes suivantes permettent d'appliquer une technique de lissage spatial ou de Forward-Backward en présence de couplage mutuel :

**Etape n°L.1 :** Décomposer en éléments propres la matrice de covariance $\mathbf{R}_x = E[\mathbf{x}(t)\,\mathbf{x}(t)^H]$ tel que :

$$\mathbf{R}_x = \mathbf{E}_s\Lambda_s\mathbf{E}_s^{\ H} + \mathbf{E}_b\Lambda_b\mathbf{E}_b^{\ H} \tag{25}$$

où $\mathbf{E}_s$ et $\mathbf{E}_b$ sont les matrices des vecteurs propres associés respectivement à l'espace signal et à l'espace bruit selon MUSICO et où $\Lambda_s$ et $\Lambda_b$ sont des matrices diagonales composées respectivement des valeurs propres de l'espace signal et des valeurs propres de l'espace bruit.

**Etape n°L.2 :** Extraire la matrice de covariance non bruitée $\mathbf{Z}(\hat{\mathbf{A}}\mathbf{R}_s\hat{\mathbf{A}}^H)\mathbf{Z}^H$ en effectuant :

$$\mathbf{R}_y = \mathbf{R}_x - \frac{trace(\Lambda_b)}{N-K}\mathbf{I}_N = \mathbf{Z}\left(\hat{\mathbf{A}}\mathbf{R}_s\hat{\mathbf{A}}^H\right)\mathbf{Z}^H$$

où $K$ est la dimension de l'espace signal tel que $K \leq P$.

**Etape n°L.3** (Lissage spatial): Appliquer l'algorithme MUSIC sur la matrice de covariance $\mathbf{R}_x^{SM}$ suivante :

$$\mathbf{R}_x^{\ SM} = \sum_{i=1}^{I}\mathbf{P}^i\left(\mathbf{Z}^{-1}\mathbf{R}_y\left(\mathbf{Z}^{-1}\right)^H\right)\left(\mathbf{P}^i\right)^H$$

**Etape n°L.3** (Forward-Backward): Appliquer l'algorithme MUSIC sur la matrice de covariance $\mathbf{R}_x^{FB}$ suivante :

$$\mathbf{R}_x^{\ FB} = \left(\mathbf{Z}^{-1}\mathbf{R}_y\left(\mathbf{Z}^{-1}\right)^H\right) + \Pi\left(\mathbf{Z}^{-1}\mathbf{R}_y\left(\mathbf{Z}^{-1}\right)^H\right)^*\Pi^T$$

Si le réseau de vecteur directeur $\hat{\mathbf{a}}(\underline{\Theta})$ le permet, les deux techniques de lissage des étapes **n°L.3** peuvent être combinées.

Les techniques de lissage spatial sont applicables en présence de couplage mutuel. Toutefois cela impose des contraintes très fortes sur la géométrie du réseau élémentaire qui ont l'inconvénient de nécessiter un très grand nombre de capteurs. Dans l'exemple suivant nous allons évaluer le nombre minimal de capteurs pour traiter le cas de deux sources cohérentes en azimut-élévation. Pour cela il faut que :

■ contrainte C1 : Le nombre de capteurs de chaque sous-réseau soit au moins égal à $N^i = 4$. En effet à cause des ambiguïtés, un réseau de N capteurs permet au plus d'estimer la direction d'arrivée de N/2 sources.
■ contrainte C2 : Le nombre de sous-réseaux soit au moins égal à 2.
■ contrainte C3 : Les sous-réseaux soient plan (non linéaires) afin de pouvoir effectuer une goniométrie en azimut-site.

La figure 6 montre qu'un réseau composé de deux sous-réseaux 601, 602 de quatre capteurs contient au minimum sept capteurs. Ce réseau a aussi l'inconvénient d'être faiblement ouvert (ou a un faible encombrement spatial) car les sous-réseaux à quatre capteurs doivent être non ambiguës. Comme les sous-réseaux sont composés de quatre capteurs, cette contrainte d'ambiguïté nécessite un espacement inter-capteur inférieur à λ/2. En effet, plus un réseau est ouvert et plus l'estimation des angles d'arrivées est précise avec une meilleure robustesse aux erreurs de calibration. Pour le cas où l'on souhaiterait effectuer une goniométrie en azimut seulement, la contrainte C3 n'est plus présente et le réseau permettant d'effectuer une goniométrie sur deux sources cohérentes composé de deux sous-réseaux de quatre capteurs est un réseau linéaire équi-espacé à cinq capteurs. Chaque sous-réseau est alors un réseau linéaire équi-espacé à quatre capteurs. La figure 7 montre que le sous-réseau linéaire 701 qui permet la goniométrie en azimut deux trajets cohérents comporte les différences suivantes par rapport au réseau 702 qui permet de le faire en azimut-élévation : d'une part, il est composé de moins de capteurs : cinq au lieu de sept, d'autre part, il a un encombrement supérieur : 4d au lieu de 3d sachant que d est une distance inférieure à λ/2, λ étant la longueur d'onde des signaux émis.

Pour la technique de Forward-Backward nécessitant un réseau avec un centre de symétrie comme illustré à la figure 8, il est possible de faire la même remarque que pour le lissage spatial : la décorrélation de deux trajets cohérents pour une goniométrie en azimut-site nécessite un réseau de capteurs ayant plus de capteurs et moins d'ouverture que le réseau permettant d'effectuer une goniométrie en azimut seulement. Pour une goniométrie en azimut, il suffit d'un réseau linéaire non forcément équi-espacé.

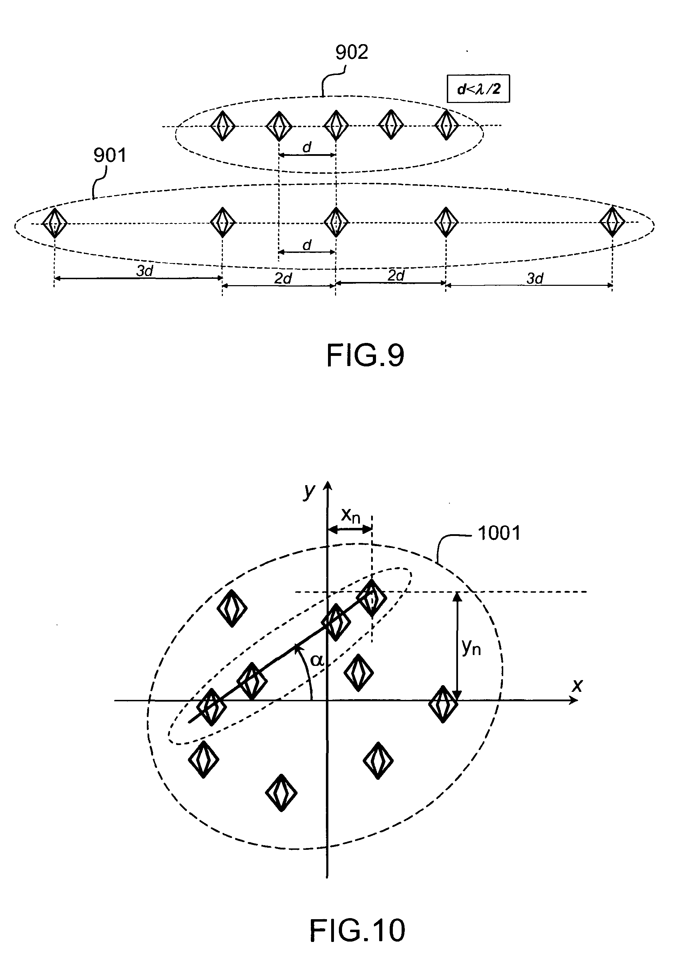

La figure 9 montre que la technique de Forward-Backward permet, par rapport à la technique de lissage spatial, d'effectuer une goniométrie sans ambiguïté sur deux trajets cohérents avec un réseau 901 ayant une plus grande ouverture (10d au lieu de 4d pour un réseau 902 utilisé pour du lissage spatial). La technique de Forward-Backward a l'avantage de ne pas imposer de contrainte de géométrie sur la moitié du réseau. L'autre moitié du réseau est le symétrique de la 1ière moitié.

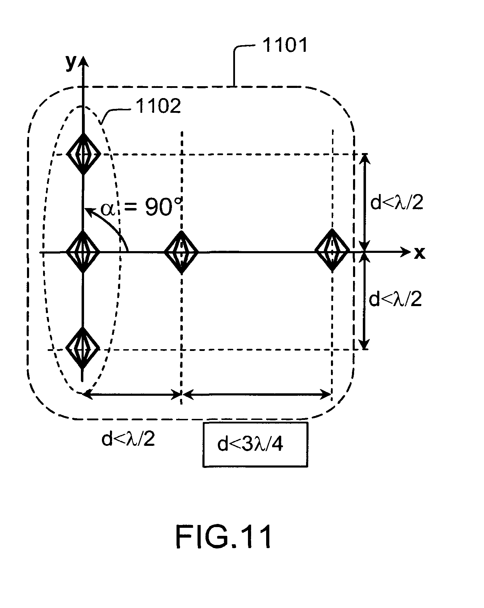

Le procédé selon l'invention présenté mixe la méthode MUSIC cohérents à une technique de Forward-Backward et/ou de lissage spatial. Compte tenu des avantages et inconvénients des techniques de lissage et de l'algorithme MUSIC-cohérent décrits plus haut, le procédé envisage d'utiliser un réseau de capteurs contenant un sous-réseau linéaire sur lequel une technique de lissage spatial et/ou de Forward-Backward est envisageable. La figure 10 montre un tel réseau 1001 avec un sous-réseau linéaire 1002 ayant une orientation α par rapport à l'axe des abscisses en x. Plus particulièrement, le procédé selon l'invention peut utiliser le réseau 1101 de la figure 11 où l'angle α=90° et le sous-réseau linéaire 1102 est composé de 3 capteurs équi-espacés sur lesquelles une technique de Forward-Backward est applicable.

Les coordonnées $(x_n^l, y_n^l)$ du n-ième capteur du sous-réseau linéaire ont alors l'expression suivante :

$$\begin{cases} x_n^l = \rho_n \cos(\alpha) \\ y_n^l = \rho_n \sin(\alpha) \end{cases} \text{ pour } 1 \le n \le N^l \qquad (26)$$

où $N^l$ est le nombre de capteurs du sous-réseau linéaire. En l'absence de couplage et selon (2), le vecteur directeur $\mathbf{a}^l(\underline{\Theta})$ associé au sous-réseau linéaire s'écrit

$$\mathbf{a}^l(\underline{\Theta}) = \begin{bmatrix} a_1^l(\underline{\Theta}) \\ \vdots \\ a_{N^l}^l(\underline{\Theta}) \end{bmatrix} \text{ avec } a_n^l(\underline{\Theta}) = \exp\left( j2\pi \frac{\rho_n}{\lambda} \cos(\theta - \alpha) \cos(\Delta) \right) \qquad (27)$$

Le vecteur $\mathbf{a}^l(\underline{\Theta})$ dépend alors d'un seul paramètre $w = \cos(\theta-\alpha)\cos(\Delta)$ de la manière suivante :

$$\mathbf{a}^l(\underline{\Theta}) = \mathbf{a}^l(w) = \begin{bmatrix} z^{\rho_1} \\ \vdots \\ z^{\rho_{N^l}} \end{bmatrix} \text{ avec } z = \exp\left( j\frac{2\pi}{\lambda} w \right) \qquad (28)$$

on note par $\mathbf{x}^l(t)$ le signal en sortie du sous-réseau linéaire et part $\mathbf{P}_{roj}$ la matrice composée de 0 et 1 permettant d'extraire les signaux du sous-réseau linéaire tel que

$$\mathbf{x}^l(t) = \mathbf{P}_{roj}\, \mathbf{x}(t) \qquad\qquad (29)$$

où $\mathbf{x}(t)$ est le signal observé sur tous les capteurs du réseau. La relation entre la variable $w=\cos(\theta-\alpha)\cos(\Delta)$ et les coordonnées du vecteur d'onde $(u,v)$ de l'équation (2) est la suivante :

$$w = u\cos(\alpha) + v\sin(\alpha) \qquad\qquad (30)$$

Connaissant $w$, l'incidence $\underline{\Theta}$ devient une fonction 1 D dépendant du paramètre $u$ tel que :

$$\underline{\Theta}(u) = (\theta,\Delta) = f(u,v) = f\left(u, \frac{w - u\cos(\alpha)}{\sin(\alpha)}\right) \qquad\qquad (31)$$

où la fonction $f(u,\,v)$ est donnée par l'expression (2). Lorsque $\alpha=0$, le vecteur de paramètre $\underline{\Theta}$ ne peut pas dépendre de la variable $u$ : Dans ce cas, l'incidence $\underline{\Theta}$ dépend la variable $v$ avec la fonction $\underline{\Theta}(v) = f((w-v\sin(\alpha))/\cos(\alpha),v)$. Pour des raisons de simplicité dans la description du procédé et sans nuire à la généralité, on supposera qu'il est toujours possible d'écrire $\underline{\Theta}$ en fonction de $u$. En conséquence,

$$\underline{\Theta}_p = f_p\left(u_p\right) \text{ avec } f_p\left(u\right) = f\left(u, \frac{w_p - u\cos(\alpha)}{\sin(\alpha)}\right) \qquad\qquad (32)$$

En présence de $P$ trajets dont au moins un groupe de $K_{max}$ sont cohérents, l'exemple présenté du procédé selon l'invention contient au minimum les étapes suivantes :

■ Etape A : Application d'une technique de lissage spatial et/ou de Forward-Backward sur le vecteur observation $\mathbf{x}^l(t)$ du réseau linéaire. Après une goniométrie 1 D suivant la variable $w$, on obtient les paramètres d'incidences $w_p=\cos(\theta_p-\alpha)\cos(\Delta_p)$ pour $(1\leq p\leq P)$. Le critère 1 D de MUSIC a l'expression suivante :

$$J_{MUSIC}\left(w\right) = \frac{\mathbf{a}^l\left(w\right)^H \mathbf{\Pi}_b^l \mathbf{a}^l\left(w\right)}{\mathbf{a}^l\left(w\right)^H \mathbf{a}^l\left(w\right)} \qquad\qquad (33)$$

où $\Pi_b^l$ est le projecteur bruit extrait de la matrice de covariance lissée.
■ Etape B : En présence de $K_{max}\leq P$ trajets cohérents, application de la méthode MUSIC-cohérent décrite plus haut avec la variable $\underline{\Theta}=\{\underline{\Theta}_1 \cdots \underline{\Theta}_{K_{max}}\}$ qui est la fonction suivante de la variable $\underline{\mathbf{u}}=\{u_1 \cdots u_{K_{max}}\}$

$$\underline{\Theta} = \left\{ f_1\left(u_1\right) \quad \cdots \quad f_{K_{max}}\left(u_{K_{max}}\right) \right\} \qquad\qquad (34)$$

où le critère de MUSIC-cohérent $J_{MUSIC\text{-}Coherent}$ est une fonction de la variable $\underline{\mathbf{u}}$ ayant $K_{max}$ dimensions.
■ Etape C : à partir de $K$ ($K$ étant le rang de la matrice de covariance $R_x$) solutions $\underline{u}_k$ minimisant la fonction $J_{MUSIC\text{-}Coherent}(\underline{u})$, il est possible d'extraire les $P$ couples d'incidences $(w_p,u_p)$ pour $(1\leq p\leq P)$ et d'en déduire les incidences $(\theta_p, \Delta_p)$ en effectuant

$$\begin{cases} \theta_p = angle\left(u_p + jv_p\right) \\ \Delta_p = \cos^{-1}\left(\left|u_p + jv_p\right|\right) \end{cases} \quad \text{où} \quad v_p = \frac{w_p - u_p \cos(\alpha)}{\sin(\alpha)} \qquad (35)$$

Les étapes précédentes montrent que le calcul d'un critère à $2K_{max}$ dimensions pour l'algorithme MUSIC-cohérent seul en 2D a été remplacé par le calcul d'un critère MUSIC à une dimension suivant le paramètre w et le coût de calcul du critère MUSIC-cohérent en 1 D avec la variable $\underline{u}$ ayant $K_{max}$ dimensions. Le gain en puissance de calcul est alors égal à

$$Gain = \frac{nb^{(2K_{\max}-1)}}{1 + nb^{(K_{\max}-1)}} \approx nb^{K_{\max}} \qquad (36)$$

où $nb$ est le nombre de points des maillages des critères (MUSIC ou MUSIC-cohérent) suivant les variables $u$ et $v$ des composantes du vecteur d'onde. Dans le cas général $nb$ est grand en étant proportionnel à la taille du réseau ($nb>50$).
On considérera que $\underline{u}_k$ est un vecteur de paramètre solution pour MUSIC cohérent lorsque

$$J_{MUSIC-Coherent}\left(\underline{u}_k\right) < \eta(K_{\max}) \qquad (37)$$

où $\eta(K_{max})$ est un seuil compris entre 0 et 1 car le critère $J_{MUSIC-Coherent}(\underline{u})$ est normalisé. Lorsque le nombre $K'$ de solutions $\underline{u}_k$ est inférieur est inférieur au rang $K$ de la matrice de covariance $R_x$ on en déduit que le nombre de trajets cohérents est supérieur à $K_{max}$. Pour le cas où $K'< K_{max}$ l'algorithme MUSIC cohérent sera appliqué avec $K_{max} = K_{max}+1$. En conséquence le procédé permet d'estimer conjointement les incidences des trajets avec le nombre de trajets cohérents.
De la même manière on considérera que $w_p$ est un paramètre solution de la goniométrie 1 D de l'étape A lorsque

$$J_{MUSIC}\left(w_p\right) < \eta \qquad (38)$$

Où $\eta$ est un seuil compris entre 0 et 1 car le critère $J_{MUSIC}(w)$ est normalisé.
Le procédé envisage de traiter le cas où au moins deux trajets cohérents vérifient $w_i=w_j$ avec $u_i \neq u_j$. Ce problème est détectable lorsque :

■ le rang de la matrice de covariance lissé reste égal à celui de la matrice de covariance $R_x$ ;

■ la méthode MUSIC ne fonctionne pas sur la matrice de covariance non lissée $Rx$.

En supposant qu'il existe $K_{max}$ trajets cohérents et que MUSIC 1 D en w donne $P'< K_{max}$ solutions de trajets cohérents, la méthode consiste à compléter la liste incomplète de $P'$ éléments $\{w_p\}$ par $K_{max} -P'$ estimation de la liste initiale des $\{w_p\}$. Plus précisément en présence de $K_{max}=2$ trajets cohérents et $P'=1$ paramètre $w_1$ détecté, il faut appliquer la méthode MUSIC-cohérent de l'étape B avec $w_1=w_1$ et $w_2= w_1$ soit l'ensemble de paramètres $\{ w_1, w_1\}$. Dans le cas où $K_{max}=3$ trajets cohérents et $P'=2$ , il existe deux configurations sur lesquelles l'étape B de MUSIC-cohérent en 1 D doit être appliqué: $\{w_1, w_2, w_2\}$ et $\{w_1, w_1, w_2\}$. En conséquence lorsque $P'< K_{max}$ l'étape B du procédé peut-être appliquée plusieurs fois. Il existe ainsi $L$ ensembles d'incidences $w_p$ suivants sur lesquelles l'étape B du procédé doit être appliqué :

$$\Omega_i = \Psi \cup X_i \text{ pour } \left(1 \le i \le L\right) \text{avec} \begin{cases} \Psi=\left\{w_p \text{ pour } 1 \le p \le P'\right\} \\ X_i \subset \Psi \text{ et } cardinal\left(X_i\right) = K_{\max} - P' \end{cases} \qquad (39)$$

Le nombre $L$ ainsi que les ensembles $\Omega_i$ peuvent être déterminés par un processus classique d'arithmétique.

Les étapes suivantes du procédé permettent d'estimer la direction d'arrivée de *P* trajets en azimut-élévation sachant qu'il existe au moins un groupe de $K_{max}$ trajets cohérents et que le réseau est perturbé par du couplage mutuel de matrice **Z** connu.

**Etape n°1 :** Décomposition en éléments propres de la matrice de covariance $\mathbf{R}_x = E[\mathbf{x}(t)\,\mathbf{x}(t)^H]$ tel que

$$\mathbf{R}_x = \mathbf{E}\Lambda\mathbf{E}^H$$

où **E** est la matrice des vecteurs propres et $\Lambda$ est une matrice diagonale composée des valeurs propres.

**Etape n°2:** A partir des valeurs propres de la matrice $\Lambda$ détermination du nombre *K* de valeurs propres dominantes donnant le rang de $\mathbf{R}_x$.

**Etape n°3 :** Décomposition suivante de la matrice $\mathbf{R}_x$

$$\mathbf{R}_x = \mathbf{E}_s\Lambda_s\mathbf{E}_s^H + \mathbf{E}_b\Lambda_b\mathbf{E}_b^H \quad \text{avec} \quad \begin{cases} \mathbf{E} = \begin{bmatrix} \mathbf{E}_s & \mathbf{E}_b \end{bmatrix} \\ \Lambda = \begin{bmatrix} \Lambda_s & \mathbf{0} \\ \mathbf{0} & \Lambda_b \end{bmatrix} \end{cases}$$

Où $\mathbf{E}_s$ et $\mathbf{E}_b$ sont les matrices des vecteurs propres associés respectivement à l'espace signal sachant que $\dim(\mathbf{E}_s) = NxK$ et où $\wedge_s$ et $\lambda_b$ sont des matrices diagonales composées respectivement des valeurs propres de l'espace signal et des valeurs propres de l'espace bruit.

**Etape n°4 :** Extraction de la matrice de covariance non bruitée et sans couplage en effectuant

$$\mathbf{R}_y = \mathbf{Z}^{-1}\left(\mathbf{R}_x - \frac{trace(\Lambda_b)}{N-K}\mathbf{I}_N\right)\mathbf{Z}^{-1H}$$

Où *K* est la dimension de l'espace signal tel que $K \leq P$.

**Etape n°5 :** Calcul du projecteur bruit de la matrice $\mathbf{R}_y$ de la manière suivante :

$$\Pi_b = \mathbf{I}_N - \mathbf{Z}^{-1}\left(\mathbf{E}_s\left(\mathbf{E}_s^H\mathbf{Z}^{-1H}\mathbf{Z}^{-1}\mathbf{E}_s\right)^{-1}\mathbf{E}_s^H\right)\mathbf{Z}^{-1H}$$

**Etape n°6:** Application de l'algorithme MUSIC en 2D avec le critère $J_{MUSIC}(\underline{\Theta}) = (\tilde{\mathbf{a}}\underline{\Theta})^H \Pi_b{}^H \tilde{\mathbf{a}}(\underline{\Theta})/(\tilde{\mathbf{a}}\underline{\Theta})^H \tilde{\mathbf{a}}(\underline{\Theta}))$ avec le vecteur $\tilde{\mathbf{a}}(\underline{\Theta})$ de l'équation (22). Estimation de $P_0 \leq K$ incidences $\underline{\Theta}p$ ($1 \leq p \leq P_0$) vérifiant $J_{MUSIC}(\underline{\Theta}_p) < \eta(1)$. Formation de l'ensemble $\underline{\Theta} = \{\underline{\Theta}_1 \ldots \underline{\Theta}_{P0}\}$ des trajets non-cohérents. Si $P_0 < K$ aller à l'étape n°7.

**Etape n°7 :** Calcul de la matrice de covariance du réseau linéaire en effectuant $\mathbf{R}_x{}^l = \mathbf{P}_{roj}\,\mathbf{R}_x\,\mathbf{P}_{roj}{}^H$ sachant que $\mathbf{x}^l(t) = \mathbf{P}_{roj}\,\mathbf{x}(t)$.

**Etape n°8 :** Application d'une (ou des deux) technique(s) de lissage sur la matrice $\mathbf{R}_x{}^l$ du réseau linéaire en effectuant soit $\tilde{\mathbf{R}}_x = \sum_{i=1}^{l} \mathbf{P}^i\mathbf{R}_x{}^l\left(\mathbf{P}^i\right)^H$ pour le lissage soit $\tilde{\mathbf{R}}_x = \mathbf{R}_x{}^l + \Pi(\mathbf{R}_x{}^l)^*\Pi^T$ pour le Forward-Backward.

**Etape n°9 :** A partir d'une décomposition en élément propre de la matrice $\tilde{\mathbf{R}}_x$ estimation du rang P de l'espace signal ainsi que du projecteur bruit $\Pi_b{}^l = \mathbf{E}_b\mathbf{E}_b{}^H$ (Etape de l'algorithme MUSIC rappelé dans les étapes 1 à 3 de ce procédé pour la matrice $\mathbf{R}_x$).

**Etape n°10 :** Application de l'algorithme MUSIC en 1 D avec le critère $J_{MUSIC}(w)=(\mathbf{a}^l(w)^H\Pi_b{}^l\mathbf{a}^l(w))/(\mathbf{a}^l(w)^H\mathbf{a}^l(w))$ avec le vecteu $\mathbf{a}^l(w)$ de l'équation (28). Estimation de $P$ incidences $w_p$ ($1{\leq}p{\leq}P$) vérifiant $J_{MUSIC}(w_p){<}\eta$.

**Etape n°11 :** Formation de l'ensemble $\Psi$ des incidences $w_p$ associé à un trajet cohérent tel que $\Psi=\{\ w_p{\neq}cos(\theta_i\text{-}\alpha)\ cos(\Delta_i)$ où $\underline{\Theta}_i=\{\theta_i,\Delta_i\}{\in}\underline{\Theta}\}$

**Etape n°12 :** Si $P{>}K$ alors $K_{max}=$cardinal$(\Psi)$ et $L=1$ avec $\Omega_1=\Psi$. Aller à l'étape n°14.

**Etape** n°13 : Si $P{\leq}K$ alors $K_{max}=K+1$ et constitution des $L$ ensembles de paramètres $\Omega_i$ de l'équation (39) avec $P'=$cardinal$(\Psi)$.

**Etape n°14 :** $i=1$

**Etape n°15 :** Application des étapes **B** et **C** de MUSIC cohérent 1 D décrit à la page 18 avec $\underline{\Theta}=f(\underline{u})=\{f_1(u_1)\cdots f_{K_{max}}(u_{K_{max}})\}$ sachant que $f_p(u)=f(u,(w_p\text{-}u\cos(\alpha))/\sin(\alpha))$ où $w_p\in\Omega_i$. Obtention de $K^i$ incidences $\underline{\Theta}_k$ pour ($1{\leq}k{\leq}K^i$).

**Etape n°16 :** Pour $k$ allant de 1 à $K^i$ si $\underline{\Theta}_k{\notin}\underline{\Theta}$ alors $\underline{\Theta}=\underline{\Theta}\cup\{\underline{\Theta}_k\}$

**Etape n°17 :** $i=i+1$. Si $i{\leq}L$ alors retour à l'étape n°14.

Un avantage du procédé selon l'invention est que le nombre minimal de capteurs pour estimer la direction d'arrivée de K trajets cohérents en 2D est plus faible qu'avec des procédés de l'art antérieur, lesquels nécessitent un nombre de capteurs supérieur à 2(K+1), le procédé selon l'invention ne nécessitant qu'un nombre de capteurs supérieur à K.
Un autre avantage du procédé selon l'invention est qu'il permet d'estimer des directions d'arrivée des trajets en 2D avec des réseaux plus grand, ce qui améliore la précision de l'estimation.

## Bibliographie

[1] RO. SCHMIDT, Multiple emitter location and signal parameter estimation, in Proc of the RADC Spectrum Estimation Workshop, Griffiths Air Force Base, New York, 1979, pp. 243-258.

[2] P. Larzabal Application du Maximum de vraisemblance au traitement d'antenne : radio-goniométrie et poursuite de cibles. PhD Thesis, Université de Paris-sud, Orsay, FR, June 1992

[3] B.Ottersten, M.Viberg, P.Stoica and A.Nehorai, Exact and large sample maximum likelihood techniques for parameter estimation and detection in array processing. In S.Haykin, J.Litva and TJ.Shephers editors, Radar Array Processing, chapter 4, pages 99-151. Springer-Verlag, Berlin 1993.

[4] A.FERREOL, E.BOYER, et P.LARZABAL, « Low cost algorithm for some bearing estimation in presence of separable nuisance parameters», Electronic-Letters , IEE, vol 40 , n°15 , pp966-967 , july 2004

[5] S. U. Pillai and B. H. Kwon, Forward/backward spatial smoothing techniques for coherent signal identification, IEEE Trans. Acoust., Speech and Signal Processing, vol. 37, pp. 8-15, Jan. 1988

[6] B. Friedlander and A. J. Weiss. Direction Finding using spatial smoothing with interpolated arrays. IEEE Transactions on Aerospace and Electronic Systems, Vol. 28, No. 2, pp. 574-587, 1992.

[7] A. Ferréol, J.Brugier et Ph.Morgand Procédé d'estimation des angles d'arrivées de sources cohérentes par une technique de lissage spatial sur un réseau de capteurs quelconque. Brevet publié sous le numéro FR 2917180.

**Revendications**

1. Procédé de détermination conjointe de l'angle d'azimut θ et de l'angle d'élévation Δ des vecteurs d'ondes de P ondes dans un système comprenant un réseau (1001) de capteurs, plusieurs ondes parmi les P ondes se propageant selon des trajets cohérents entre une source et lesdits capteurs, le procédé étant **caractérisé en ce qu'**il comprend au moins les étapes suivantes :

   ■ sélectionner un sous-ensemble de capteurs parmi les dits capteurs pour former un sous-réseau linéaire (1002) de capteurs ;
   ■ appliquer, sur les signaux issus du sous-réseau choisi, un algorithme suivant une seule dimension pour décorréler les sources des P ondes ;
   ■ déterminer une première composante w desdits vecteurs d'onde en appliquant, sur les signaux observés sur les capteurs du sous-réseau choisi, un algorithme de goniométrie suivant la seule dimension w ;
   ■ déterminer une deuxième composante u desdits vecteurs d'onde en appliquant un algorithme de goniométrie suivant la seule dimension u sur les signaux issus de l'ensemble du réseau de capteurs,
   ■ déterminer θ et Δ à partir de w et u.

2. Procédé selon la revendication 1, **caractérisé en ce que** :

   ■ on choisit les capteurs constituant le sous-réseau de telle sorte qu'au moins une partie du sous-réseau soit invariante par translation ;
   ■ on applique un algorithme de lissage spatial pour décorréler les sources des P ondes.

3. Procédé selon la revendication 1 ou 2, **caractérisé en ce que** :

   ■ on choisit les capteurs constituant le sous-réseau de telle sorte qu'au moins une partie de sous-réseau comporte un centre de symétrie ;
   ■ on applique un algorithme de Forward-Backward pour décorréler les sources des P ondes.

4. Procédé selon l'une des revendications 1, 2 ou 3, **caractérisé en ce que** la première composante w déterminée des vecteurs d'onde est la projection, sur l'axe formé par le sous-réseau linéaire, de la projection des vecteurs d'onde sur le plan formé par le réseau de capteurs.

5. Procédé selon l'une des revendications précédentes, **caractérisé en ce qu'**il comporte au moins les étapes suivantes :

   ■ calculer la matrice de covariance $R_x$ sur l'ensemble du réseau de capteurs ;
   ■ extraire à partir de $R_x$, la matrice de covariance $R_x$' correspondant au sous-réseau linéaire choisi ;
   ■ appliquer un algorithme de décorrélation des sources sur $R_x$' ;
   ■ estimer, pour chaque trajet p, les valeurs de la première composante $w_p = \cos(\theta_p - \alpha).\cos(\Delta_p)$ en appliquant un algorithme de goniométrie en 1 D sur la matrice $R_x$' décorrélée, $\alpha$ étant l'angle d'orientation en azimut de l'axe formé par le sous-réseau linéaire ;
   ■ estimer les valeurs de la deuxième composante $u_p = \cos(\theta_p).\cos(\Delta_p)$, pour chaque trajet p, en appliquant un algorithme de goniométrie en 1 D sur la matrice $R_x$ ;
   ■ déterminer, à partir des valeurs des couples $(w_p, u_p)$, les valeurs des couples azimut-élévation $(\theta_p, \Delta_p)$.

6. Procédé selon l'une des revendications précédentes, **caractérisé en ce que** l'algorithme de goniométrie utilisé pour déterminer la première composante w de chaque vecteur d'onde P est l'algorithme MUSIC, le critère $J_{MUSIC}$ à minimiser pour déterminer ladite composante w étant égal à $J_{MUSIC}(w) = \dfrac{\mathbf{a}^l(w)^H \mathbf{\Pi}_b{}^l \mathbf{a}^l(w)}{\mathbf{a}^l(w)^H \mathbf{a}^l(w)}$,

où $\Pi_b{}^l$ est le projecteur bruit extrait de la matrice de covariance décorrélée $R_x$' correspondant au sous-réseau linéaire choisi, et $\mathbf{a}(w)^l$ représente la réponse du sous-réseau choisi aux ondes incidentes P.

7. Procédé selon l'une des revendications précédentes, **caractérisé en ce que** l'algorithme de goniométrie utilisé pour déterminer la deuxième composante est l'algorithme MUSIC-cohérent en une seule dimension, le critère à minimiser étant :

$$J_{MUSIC-Coherent}\left(\underline{\mathbf{\Theta}}\right)=\frac{\det\left(\mathbf{D}(\underline{\mathbf{\Theta}})^{H}\,\mathbf{\Pi}_{b}\mathbf{D}(\underline{\mathbf{\Theta}})\right)}{\det\left(\mathbf{D}(\underline{\mathbf{\Theta}})^{H}\,\mathbf{D}(\underline{\mathbf{\Theta}})\right)}$$

où

$$\underline{\mathbf{\Theta}}=\left\{f_{1}\left(u_{1}\right)\quad\cdots\quad f_{K_{\max}}\left(u_{K_{\max}}\right)\right\},\text{ avec }f_{p}\left(u\right)=\dot{f}\left(u,\frac{w_{p}-u\cos\left(\alpha\right)}{\sin\left(\alpha\right)}\right),$$

$\alpha$ étant l'angle d'orientation en azimut de l'axe formé par le sous-réseau linéaire, D($\underline{\Theta}$) étant un vecteur égal à [a($\underline{\Theta}_{1}$) ... a($\underline{\Theta}_{Kmax}$) ], a($\underline{\Theta}_{i}$) étant la réponse du réseau de capteurs au trajet d'indice i, $K_{max}$ étant le nombre maximum de trajets cohérents.

8. Procédé selon l'une des revendications 1 à 6, **caractérisé en ce que** l'algorithme de goniométrie utilisé pour déterminer la deuxième composante est l'algorithme du maximum de vraisemblance.

9. Procédé selon l'une des revendications 5 à 8, le réseau étant perturbé par du couplage mutuel de matrice Z connue, le procédé étant **caractérisé en ce qu'**il comporte une étape de suppression du couplage exécutée préalablement aux étapes d'estimation des valeurs des composantes w et u, ladite étape de suppression du couplage déterminant une matrice de covariance nettoyée du bruit en appliquant le traitement suivant sur la matrice de covariance : $Z^{-1}$ ($R_x$ -$\sigma^2$|)$Z^{-1H}$, $\sigma^2$ étant le niveau de bruit estimé.

10. Procédé selon l'une des revendications 5 à 9, **caractérisé en ce que** la détermination des couples de valeurs ($\theta_p$, $\Delta_p$) à partir des valeurs de couples ($w_p$, $u_p$) est effectuée comme suit :

$$\begin{cases}\theta_{p}=angle\left(u_{p}+jv_{p}\right)\\\Delta_{p}=\cos^{-1}\left(\left|u_{p}+jv_{p}\right|\right)\end{cases}\text{ où }\quad v_{p}=\frac{w_{p}-u_{p}\cos\left(\alpha\right)}{\sin\left(\alpha\right)}$$

**Patentansprüche**

1. Verfahren zur gemeinsamen Bestimmung des Azimutwinkels $\theta$ und des Erhebungswinkels $\Delta$ der Wellenvektoren von P Wellen in eine System, das ein Sensornetzwerk (1001) umfasst, wobei sich mehrere Wellen von den P Wellen auf kohärenten Wegen zwischen einer Quelle und den Sensoren verbreiten, wobei das Verfahren **dadurch gekennzeichnet ist, dass** es mindestens die folgenden Schnitte umfasst:

• Auswählen einer Untergruppe von Sensoren aus den Sensoren, um ein lineares Sensor-Unternetzwerk (1002) zu bilden,
• Anwenden auf die Signale, die von dem ausgewählten Unternetzwerk ausgegeben werden, eines Algorithmus gemäß einer einzigen Dimension, um die Quellen der P Wellen zu dekorrelieren,
• Bestimmen einer ersten Komponente w der Wellenvektoren durch Anwenden auf die auf den Sensoren des ausgewählten Unternetzwerks beobachteten Signale eines Goniometrie-Algorithmus gemäß der einzigen Dimension w,
• Bestimmen einer zweiten Komponente u der Wellenvektoren durch Anwenden auf die Signale, die von der Gesamtheit des Sensornetzwerks ausgegeben werden, eines Goniometrie-Algorithmus gemäß der einzigen Dimension u,
• Bestimmen von $\theta$ und $\Delta$ ausgehend von w und u.

2. Verfahren nach Anspruch 1, **dadurch gekennzeichnet, dass**:

• die Sensoren, die das Unternetzwerk bilden, derart ausgewählt werden, dass mindestens ein Teil des Unternetzwerks durch Translation invariant ist,
• ein Raumglättungsalgorithmus angewendet wird, um die Quellen der P Wellen zu dekorrelieren.

**3.** Verfahren nach Anspruch 1 oder 2, **dadurch gekennzeichnet, dass**:

• die Sensoren, die das Unternetzwerk bilden, derart ausgewählt werden, dass mindestens ein Teil des Unternetzwerks ein Symmetriezentrum aufweist,
• ein Forward-Backward-Algorithmus angewendet wird, um die Quellen der P Wellen zu dekorrelieren.

**4.** Verfahren nach einem der Ansprüche 1, 2 oder 3, **dadurch gekennzeichnet, dass** die erste Komponente w, die von den Wellenvektoren bestimmt wird, die Projektion auf die von dem linearen Unternetzwerk gebildete Achse der Projektion der Wellenvektoren auf die von dem Sensornetzwerk gebildete Ebene ist.

**5.** Verfahren nach einem der vorangehenden Ansprüche, **dadurch gekennzeichnet, dass** es mindestens die folgenden Schritte aufweist:

• Berechnen der Kovarianzmatrix $R_x$ über die Gesamtheit des Sensornetzwerks,
• Auslesen der Kovarianzmatrix $R_x'$, die dem ausgewählten linearen Unternetzwerk entspricht, aus $R_x$,
• Anwenden eines Dekorrelationsalgorithmus der Quellen auf $R_x'$,
• Ermitteln, für jeden Weg p, der Werte der ersten Komponente $w_p = \cos(\theta_p - \alpha) \cdot \cos(\Delta_p)$ durch Anwenden eines Goniometriealgorithmus in 1D auf die dekorrelierte Matrix $R_x'$, wobei $\alpha$ der Azimut-Orientierungswinkel der von dem linearen Unternetzwerk gebildeten Achse ist,
• Ermitteln der Werte der zweiten Komponente $u_p = \cos(\theta_p) \cdot \cos(\Delta_p)$ für jeden Weg p durch Anwenden eines Goniometriealgorithmus in 1 D auf die Matrix $R_x$,
• Bestimmen, ausgehen von den Werten der Paare ($w_p$, $u_p$), der Werte der Paare Azimut-Erhebung ($\theta_p$, $\Delta_p$).

**6.** Verfahren nach einem der vorangehenden Ansprüche, **dadurch gekennzeichnet, dass** der für die Bestimmung der ersten Komponente w jedes Wellenvektors P verwendete Goniometriealgorithmus der Algorithmus MUSIC ist, wobei das für die Bestimmung der Komponente w zu minimierende Kriterium $J_{MUSIC}$ gleich

$$J_{MUSIC}(w) = \frac{a'(w)^H \Pi_b' a'(w)}{a'(w)^H a'(w)} \text{ ist,}$$

wobei $\pi_b'$ der aus der dekorrelierten Kovarianzmatrix $R_x'$, die dem ausgewählten linearen Unternetzwerk entspricht, ausgelesene Geräuschprojektor ist, und a(w)' die Antwort des ausgewählten Unternetzwerks auf die einfallenden Wellen P darstellt.

**7.** Verfahren nach einem der vorangehenden Ansprüche, **dadurch gekennzeichnet, dass** der für die Bestimmung der zweiten Komponente verwendete Goniometriealgorithmus der in einer einzigen Dimension MUSIC-kohärente Algorithmus ist, wobei das zu minimierende Kriterium ist:

$$J_{MUSIC-Coherent}(\underline{\Theta}) = \frac{\det\left(D(\underline{\Theta})^H \Pi_b D(\underline{\Theta})\right)}{\det\left(D(\underline{\Theta})^H D(\underline{\Theta})\right)}$$

wobei

$$\underline{\Theta} = \left\{ f_1(u_1) \quad \cdots \quad f_{K_{max}}(u_{K_{max}}) \right\} \text{ mit } f_p(u) = f\left(u, \frac{w_p' - u\cos(\alpha)}{\sin(\alpha)}\right),$$

wobei $\alpha$ der Azimut-Orientierungswinkel der von dem linearen Unternetzwerk gebildeten Achse ist, wobei $D(\underline{\Theta})$ ein Vektor gleich [$a(\underline{\Theta}_1)$ ... $a(\underline{\Theta}_{kmax})$] ist, wobei $a(\underline{\Theta}_i)$ die Antwort des Sensornetzwerks auf den Weg mit den Index i ist, wobei $K_{max}$ die maximale Anzahl kohärenter Wege ist.

8. Verfahren nach einem der Ansprüche 1 bis 6, **dadurch gekennzeichnet, dass** der zur Bestimmung der zweiten Komponente verwendete Goniometriealgorithmus der Algorithmus des Wahrscheinlichkeitsmaximums ist.

9. Verfahren nach einem der Ansprüche 5 bis 8, wobei das Netzwerk durch gegenseitige Kopplung einer bekannten Matrix Z gestört wird, wobei das Verfahren **dadurch gekennzeichnet ist, dass** es einen Schritt der Unterdrückung der Kopplung aufweist, der vor den Schritten der Ermittlung der Werte der Komponenten w und u durchgerührt wird, wobei der Schritt der Unterdrückung der Kopplung eine geräuschbereinigte Kovarianzmatrix bestimmt durch Anwendung der folgenden Behandlung auf die Kovarianzmatrix: $Z^{-1}(R_x-\sigma^2|)Z^{-11}$, wobei $\sigma^2$ das ermittelte Geräuschniveau ist.

10. Verfahren nach einem der Ansprüche 5 bis 9, **dadurch gekennzeichnet, dass** die Bestimmung der Wertepaare $(\theta_p, \Delta_p)$ ausgehend von den Wertepaaren $(w_p, u_p)$ wie folgt durchgeführt wird:

$$\begin{cases} \theta_p = angle\left(u_p + jv_p\right) \\ \Delta_p = \cos^{-1}\left(\left|u_p + jv_p\right|\right) \end{cases}$$

wobei

$$v_p = \frac{w_p - u_p \cos(\alpha)}{\sin(\alpha)} \ .$$

## Claims

1. A method for jointly determining the angle of azimuth $\theta$ and the angle of elevation $\Delta$ of the wave vectors of P waves in a system comprising an array (1001) of sensors, several waves among the P waves propagating along coherent paths between a source and said sensors, said method being **characterised in that** it comprises at least the following steps:

   ■ selecting a sub-set of sensors from said sensors so as to form a linear sub-array (1002) of sensors;
   ■ applying, to the signals coming from the selected sub-array, a one dimension algorithm for decorrelating the sources of the P waves;
   ■ determining a first component w of said wave vectors by applying a goniometry algorithm in one dimension w to the signals that are observed on the sensors of the selected sub-array;
   ■ determining a second component u of said wave vectors by applying a goniometry algorithm in one dimension u to the signals coming from the entire array of sensors;
   ■ determining $\theta$ and $\Delta$ from w and u.

2. The method according to claim 1, **characterised in that**:

   ■ the sensors that constitute the sub-array are selected so that at least one part of said sub-array is invariant by translation;
   ■ a spatial smoothing algorithm is applied to decorrelate the sources of the P waves.

3. The method according to claim 1 or 2, **characterised in that**:

   ■ the sensors that constitute the sub-array are selected so that at least one part of the sub-array comprises a centre of symmetry;
   ■ a Forward-Backward algorithm is applied to decorrelate the sources of the P waves.

4. The method according to claim 1, 2 or 3, **characterised in that** the first determined component w of said wave vectors is the projection, over the axis that is formed by the linear sub-array, of the projection of the wave vectors over the plane that is formed by the array of sensors.

5. The method according to any one of the preceding claims, **characterised in that** it comprises at least the following steps:

- calculating the covariance matrix $R_x$ over the entire array of sensors;
- extracting from $R_x$ the covariance matrix $R_x'$ that corresponds to the selecte linear sub-array;
- applying a source decorrelation algorithm to $R_x'$;
- estimating, for each path p, the values of the first component $w_p = \cos(\theta_p - \alpha).\cos(\Delta_p)$ by applying a 1D goniometry algorithm to the decorrelated matrix $R_x'$, $\alpha$ being the azimuth angle of orientation of the axis that is formed by the linear sub-array;
- estimating the values of the second component $u_p = \cos(\theta_p \alpha).\cos(\Delta_p)$, for each path p, by applying a 1D goniometry algorithm to the matrix $R_x$;
- determining, on the basis of the values of the pairs $(w_p, u_p)$, the values of the azimuth-elevation pairs $(\theta_p, \Delta_p)$.

6. The method according to any one of the preceding claims, **characterised in that** the goniometry algorithm that is used to determine the first component w of each wave vector P is the MUSIC algorithm the criterion $J_{MUSIC}$ that is to be minimised to determine said component w being equal

$$J_{MUSIC}(w') = \frac{\mathbf{a}'(w')^H \, \mathbf{\Pi}_b' \mathbf{a}'(w')}{\mathbf{a}'(w')^H \, \mathbf{a}'(w)}$$

where $\pi_b'$ is the noise projector that is extracted from the decorrelated covariance matrix $R_x'$ that corresponds to the selected linear sub-array, and a'(w) represents the response of the selected sub-array to the incident waves P.

7. The method according to any one of the preceding claims, **characterised in that** the goniometry algorithm that is used to determine the second component is the coherent MUSIC algorithm in one dimension, the criterion to be minimised being:

$$J_{MUSIC-Coherent}(\underline{\Theta}) = \frac{\det\left(D(\underline{\Theta})^H \, \mathbf{\Pi}_b D(\underline{\Theta})\right)}{\det\left(D(\underline{\Theta})^H \, D(\underline{\Theta})\right)}$$

where

$$\underline{\Theta} = \left\{ f_1(u_1) \quad \cdots \quad f_{K_{max}}(u_{c_{max}}) \right\} \text{with} \quad f_p(u) = f\left(u, \frac{w_p - u\cos(\alpha)}{\sin(\alpha)}\right)$$

$\alpha$ being the azimuth angle of orientation of the axis that is formed by the linear sub-array, $D(\Theta)$ being a vector that is equal to $[a\Theta_1) \dots a(\Theta_{Kmax})]$, $a(\underline{\Theta}_i)$ being the response of the array of sensors to the path of index i, $K_{max}$ being the maximum number of coherent paths.

8. The method according to any one of claims 1 to 6, **characterised in that** the goniometry algorithm that is used to determine the second component is the maximum likelihood algorithm.

9. The method according to any one of claims 5 to 8, the array being disrupted by the mutual coupling of known matrix Z, said method being **characterised in that** it a step of eliminating the coupling that is executed before the steps of estimating the values of the components w and u, said step of eliminating the coupling determining a covariance matrix that is cleaned of noise by applying the following processing to the covariance matrix: $\mathbf{Z^{-1} (R_x - \sigma^2|)Z^{-1H}}$, $\sigma^2$ being the estimated noise level.

10. The method according to anyone of claims 5 to 9, **characterised in that** determining the pairs of values $(\theta_p, \Delta_p)$ on the basis of the pairs of values $(w_p, u_p)$ is carried out as follows:

$$\begin{cases} \theta_p = angle\left(u_p + jv_p\right) \\ \Delta_p = \cos^{-1}\left(\left|u_p + jv_p\right|\right) \end{cases}$$

where

$$v_p = \frac{w_p - u_p \cos(\alpha)}{\sin(\alpha)}.$$

FIG.1

FIG.2

FIG.3

FIG.4

FIG.5

FIG.6

702

701

$d < \lambda / 2$

## FIG.7

$x_n$

$y_n$

$y_n$

$x_n$

## FIG.8

902

$d < \lambda/2$

901

$d$

$d$

$3d$   $2d$   $2d$   $3d$

# FIG.9

$y$

$x_n$

1001

$\alpha$

$y_n$

$x$

# FIG.10

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2917180

**Littérature non-brevet citée dans la description**

- **RO. SCHMIDT.** Multiple emitter location and signal parameter estimation, in Proc of the RADC Spectrum Estimation Workshop. *Griffiths Air Force Base, New York,* 1979, 243-258
- **P. LARZABAL.** Application du Maximum de vraisemblance au traitement d'antenne : radio-goniométrie et poursuite de cibles. *PhD Thesis,* Juin 1992
- Exact and large sample maximum likelihood techniques for parameter estimation and detection in array processing. **B.OTTERSTEN.** Radar Array Processing. Springer-Verlag, 1993, 99-151
- **A.FERREOL ; E.BOYER ; P.LARZABAL.** Low cost algorithm for some bearing estimation in presence of separable nuisance parameters. *Electronic-Letters,* Juillet 2004, vol. 40 (15), 966-967
- **S. U. PILLAI ; B. H. KWON.** Forward/backward spatial smoothing techniques for coherent signal identification. *IEEE Trans. Acoust., Speech and Signal Processing,* Janvier 1988, vol. 37, 8-15
- **B. FRIEDLANDER ; A. J. WEISS.** Direction Finding using spatial smoothing with interpolated arrays. *IEEE Transactions on Aerospace and Electronic Systems,* 1992, vol. 28 (2), 574-587